Europäisches Patentamt

**European Patent Office**

**Office européen des brevets**

(19)

(11) Publication number: **0 040 505**
**B1**

(12) **EUROPEAN PATENT SPECIFICATION**

(45) Date of publication of patent specification: **08.06.83**

(21) Application number: **81302101.1**

(22) Date of filing: **12.05.81**

(51) Int. Cl.³: **B 23 F 1/08, F 16 D 1/06,**
**F 16 C 3/00**

(54) Method of forming a spline and a splined connection.

(30) Priority: **16.05.80 PC T/US80/00578**

(43) Date of publication of application:
**25.11.81 Bulletin 81/47**

(45) Publication of the grant of the patent:
**08.06.83 Bulletin 83/23**

(84) Designated Contracting States:
**FR GB IT**

(56) References cited:
**DE - A - 2 314 374**
**DE - A - 2 333 040**
**US - A - 3 338 603**
**US - A - 3 951 481**

(73) Proprietor: **CATERPILLAR TRACTOR CO.**
**100 Northeast Adams Street**
**Peoria Illinois 61629 (US)**

(72) Inventor: **Bernhagen, James R.**
**301, South 8th Street**
**Eldridge Iowa 52748 (US)**

(74) Representative: **Jackson, Peter Arthur et al,**
**GILL JENNINGS & EVERY 53 to 64, Chancery**
**Lane**
**London WC2A 1HN (GB)**

Courier Press, Leamington Spa, England

## Method of forming a spline and a splined connection

Splined surfaces and splined connections are well known as are broaching methods for forming them. However, such prior art splined connections frequently have not perfectly matched and thus have permitted at least some degree of backlash between the connected components. Even for ideally matching splines, most materials have a tendency to distort slightly during operation, thereby permitting backlash. Over the lifetime of the splined components, the backlash tends to increase as wear between the components occurs.

There are many uses of splined components where elimination of backlash is particularly important. One example is found in our U.S. Patent Specification No. 3,951,481, which shows a drive unit having a splined hub located between a second fixed hub and bearings. In this unit it is desirable to maintain a precise loading on the bearings. However, because of the backlash of the splined hub, the hubs tend to rub together and wear down, thereby reducing the load applied through the hubs to the bearings. No. 3,951,481 discloses the use of a plurality of pins to apply the preload rather than the splined hub because of the wear which the hub incurs.

US—A—3338603 discloses a splined connection involving two complementary splines of the tapered involute type. Accurate matching of these splines is also necessary.

In accordance with a first aspect of the invention, a splined connection between a first member and a second member comprises a tapered spline of the first member mating with an untapered spline of the second member.

The invention also includes a method of forming a tapered spline on a first portion of a member about an axis, the method comprising deflecting the first portion of the member in the axial direction; broaching the deflected first portion of the member to form an untapered spline on the first portion of the member and causing the member to reassume its undeflected condition.

The invention thus provides the possibility of having a splined connection which allows substantially no backlash between the connected components. By providing one of the components with a tapered spline, an improved mating may be achieved which eliminates undesirable backlash, thereby preventing the wearing down of contacting surfaces. The elimination of wear in various situations also permits use of simpler and less time consuming methods of installing the splined components and further eliminates the need for induction hardening of the splined components.

By distorting the element before forming the spline, a tapered spline may be formed by using conventional broaching tools and methods and enables the backlash-free connection to be formed on existing parts where desirable with no other design change being required.

An example of the formation of a tapered spline, and a splined connection, in accordance with the invention are illustrated in the accompanying drawings, in which:—

Figure 1 is a sectional view of a hub in a distorted condition prior to broaching, the distortion shown being exaggerated;

Figure 2 is a sectional view of the hub in its distorted condition after broaching has occurred;

Figure 3 is a broken sectional view of the undistorted hub and a mating male spline, the taper of the female spline being exaggerated; and,

Figure 4 is a cross-sectional view of an outboard planetary final drive unit containing a hub incorporating the splined connection.

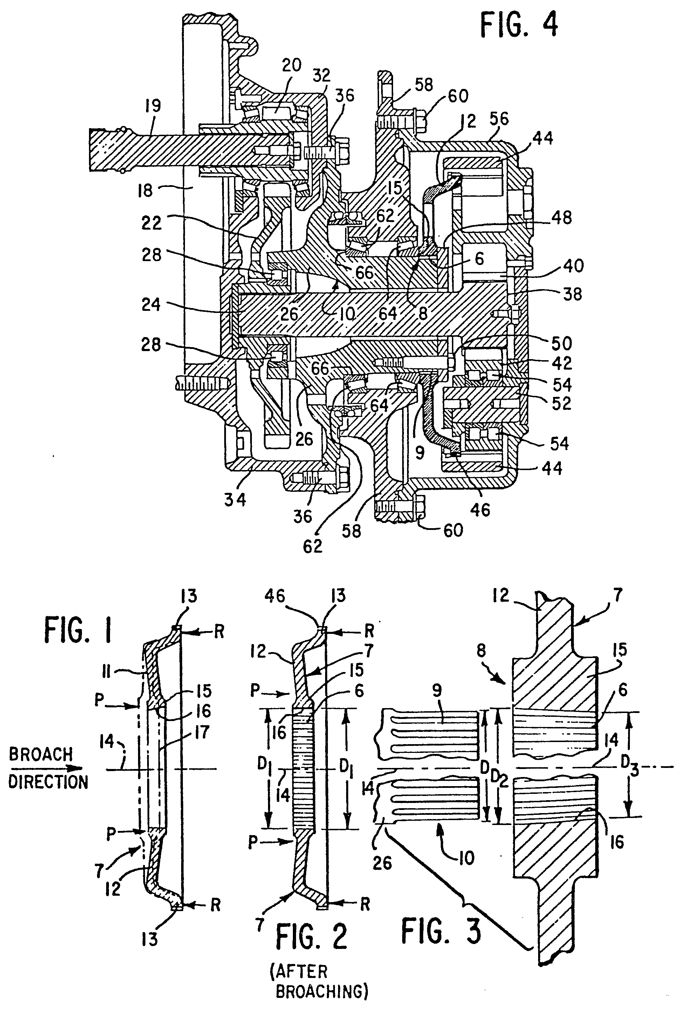

Figures 1 to 3 illustrated the steps employed in providing a tapered female spline 6 in a first member 7 for use in a backlash-free splined connection 8 to a straight (i.e. untapered) male spline 9 of a second member 10. For convenience of illustration, but without restriction to the use which is described, the first member 7 is a hub 22, in which the internal spline 6 is cut. The hub 12 has a disc-shaped body portion 11 with a radially outwardly directed flange 13 about the outer periphery thereof and a radially inwardly directed collar 15 having, as shown in Fig. 1, a cylindrically-shaped wall 16 defining an axially directed hole or aperture 17 having a central axis 14. The central axis 14 extends perpendicular to the plane of the hub 12. Initially, external forces P, R are applied to distort the hub 12 along the central axis 14 as shown in exaggerated form in Fig. 1. The external force R at the perimeter of the flange 13 of the hub 12 is actually a reactive force which results when the flange 13 is abutted either against a fixed surface of a tool or jig for use in the broaching machine or against one jaw of a clamping device. The force P is a distorting force applied evenly about the axial periphery of the collar 15 of the hub 12 which, for example, could be applied by a movable surface of a tool or jig or by the second jaw of a clamping device.

The interior hole or aperture 17 of the hub 12 is splined, such as by broaching, in a conventional manner with the direction of broaching being from the inwardly distorted side of the hub 12 to form the complete female spline 6 in the wall 16 of the collar 15 in a single pass. With the hub 12 distorted when the spline is machined into the collar 15, the female spline 6 thus formed is a uniform cylindrical spline as shown in Fig. 2. When the external forces P, R are thereafter removed, the hub 12 and collar 15 will return to an undistorted configuration, causing the spline 6 to be slightly tapered as shown in exaggerated form in Fig. 3.

With the hub 12 distorted, the female spline 6 is broached at a diameter $D_1$ which is equal to or slightly greater than D, the diameter of the male spline 9 (Figure 3). When the external loads P, R are removed, the diameter on the concave side of the distortion increases to $D_2$ while the diameter on the opposite side decreases to $D_3$. The scale of these maximum and minimum diameters $D_2$, $D_3$ is such that 1/2 to 3/4 of the hub 12 may pass freely over the mating male spline 9. Thus, the taper is such that

$$[D_2 + D_3]/2 \geq D \geq [D_2 + 3D_3]/4.$$

Resultingly, at least 1/4 of the female spline 6 is of a diameter slightly smaller than the male spline 9 and must be forced onto the male spline 9. By forcing the undersized portion of the female spline 6 over the male spline 9, a rigid connection between two components is created reducing or substantially eliminating backlash, a result which analytical study has shown would be exhibited by a tapered female spline.

The distortion of the hub 12 by the external loads P, R is very slight. Therefore, the hub 12 is not deflected beyond its elastic limit and automatically returns to its original shape after the external loads are removed. The resultant taper of the female spline 6 is also very slight. As an example, one hub was deflected and a spline was machined in the collar 15 thereof, resulting in a taper on the order of 0.1016 mm per 25.4 mm (0.004 inch per inch) of spline length. Thus the maximum and minimum diameters $D_2$, $D_3$ are greater than and less than the male spline diameter D by only a few thousandths of an inch. This enables the undersized portion of the female spline 6 to be forced over the larger male spline 9, requiring only a small amount of distortion of the mating surfaces, well within their permissible distortion ranges.

With the conventional cylindrical splines, the only way to eliminate backlash is to form a virtually perfect mating of splined surfaces and use material which is highly resistant to deformation, as by case hardening. To do so would be very expensive. By using the tapered spline of this invention, the elimination of backlash can be achieved without requiring that the spline be broached to create a perfect match. Since a portion of the female spline 6 is smaller in diameter than the matching male spline 9, the two splines must deform for the female spline 6 to pass around the larger male spline 9. This slight deformation work hardens the matching spline surfaces and results in a virtually perfect mating which is substantially free from backlash.

A tapered male spline providing the improved backlash-free mating of the above described embodiment may alternatively be formed to mate with a cylindrical female spline. The spline can be formed in essentially the same manner as the tapered female spline described above. If the element on which the male spline is formed is capable of being distorted appropriately (i.e. is relatively thin in comparison to its diameter), broaching can be done in a conventional manner on the distorted element as above. In this case however, the element would be fixed at its centre when distorted.

A hub having a slightly tapered spline as taught herein may be used in any machine or drive train where it is imperative that backlash between spline connected parts be virtually eliminated. One example of an outboard planetary final drive unit having such a requirement is shown in Figure 4.

Power is input to this unit as shown generally at 18, the power being transmitted from an engine (not shown) through a drive mechanism (also not shown) to a first shaft 19. The first shaft 19 has a spline connection with a first gear 20, which first gear 20 meshes with and drives a second gear 22 having a spline connection with a drive shaft 24.

Supporting the drive shaft 24 for rotation is a spindle 26 and a plurality of bearings 28. The spindle 26 is locked to the case assembly 32, 34 by a plurality of bolts 36.

The proximal end 38 of the drive shaft 24 has gear teeth and acts as a sun gear 40. The sun gear 40 drives a plurality of planet gears, one of which is shown at 42. The planet gears 42 mesh with a fixed circumscribing ring gear 44. The ring gear 44 is fixed against rotation by a hub 12 which has a male spline 46 meshing with the ring gear 44 and a female spline 6 meshing with a mating male spline 9 on the spindle 26. Due to a need to eliminate backlash (as detailed below), this female spline 6 is tapered to provide the improved mating heretofore described. The collar 15 containing the female spline 6 is secured against axial movement by a locking hub 48 which is secured to the end of the spindle 26 by a plurality of bolts 50.

Each of the planet gears 42 has a rod 52 which is rotatable within bearings 54 inside the planet gear 42. Each rod 52 is rigidly fixed to the surrounding carrier 56, rotating the carrier 56 around the sun gear axis. For each rotation of the planet gear 42 around the sun gear 40, the rod 52 itself rotates one time around its own axis.

The carrier 56 is rigidly connected to a drive sprocket 58 by a plurality of bolts 60 so that the drive sprocket 58 rotates with the carrier 56. The drive sprocket 58 is supported for this rotation around the spindle 26 by a plurality of bearings 62, 64. The drive sprocket 58 is the final element in the drive train and directly applies the power to its intended use. A typical use is to drive an endless articulated track having shoes for powered movement of a vehicle.

It is desirable to establish a specific axial preload on the bearings 62, 64 around the spindle 26 to prevent looseness and thus maintain optimum operation of the bearings 62, 64. To accomplish this, the left set of bearings 62 in Figure 4 rests against an annular shoulder 66 and a preload is applied to the right set of bearings 64. The preload is applied by establishing a precise thickness to the collar 15 containing the female spline portion 6 of the hub 12 so that it applies the desired pressure to the right bearings 64 when the hub 12 is itself pressured to the left by the locking hub 48.

A probability bearing adjusting method is used to preload the bearings which results in the majority of bearings 62, 64 being loaded properly. The actual loading force is not measured but the correct force is established by proper axial sizing of the collar 15 of the female spline portion. This method is much simpler and less time consuming than prior preloading methods, requiring only that the locking hub 48 be secured to the end of the spindle 26. There is no need for shims, and, since this is a probability method, the locking hub 48 need not be adjusted for each bearing 64. Thus fewer bolts 50 are required to secure the locking hub 48 to the spindle 26.

Because the probability bearings adjusting method requires that precise dimensions be maintained around the female spline 6 of the hub 12 to keep the proper preload applied during operation, it is desirable to eliminate all backlash of the female spline connection. In the prior art, slight backlash at this connection caused the hubs 12, 48 to wear down, resulting in an undesirable decrease in the preload on the bearings 62, 64. For this reason, the backlash-free mating provided by the tapered spline of this invention is highly desirable at this location.

## Claims

1. A method of forming a tapered spline (6) on a first portion of a member (7) about an axis (14), the method comprising deflecting the first portion of the member (7) in the axial direction; broaching the deflected first portion of the member (7) to form an untapered spline (6) on the first portion of the member (7); and causing the member (7) to reassume its undeflected condition.

2. A method according to claim 1, wherein the deflecting step comprising restraining a second portion (13) of the member radially offset from the first portion and concentric with the axis against axial movement; and applying to the first portion a uniform axial load (P) concentrically with the axis.

3. A method according to claim 2, wherein the broaching step forms a female spline (6) in the member (7) and the member (7) is restrained adjacent to its periphery (13) during the deflection.

4. A method according to claim 2, wherein the broaching step forms a male spline (9) and the member (7) is restrained to its centre during the deflection.

5. A method according to any one of the preceding claims, wherein the broaching step is performed in a single pass.

6. A splined connection between a first member (7) and a second member (10), the connection comprising a tapered spline (6) of the first member (7) mating with a spline (9) of the second member (10), characterised in that the spline (9) of the second member (10) is untapered.

7. A connection according to claim 6, wherein the diameter of the untapered spline (9) is D, and the diameters at the opposite ends of the tapered spline (6) are $D_2$ and $D_3$ where $D_2 > D > D_3$.

8. A connection according to claim 6 or claim 7, wherein the taper is substantially 0.1016 mm. per 25.4 mm. of spline length.

9. A connection according to any one of claims 6 to 8, wherein between $\frac{1}{2}$ and $\frac{3}{4}$ of the length of the tapered spline (6) is larger in diameter than the untapered spline (9) so that:

$$[D_2 + D_3]/2 \geq D \geq [D_2 + 3D_3]/4$$

10. A connection according to any one of claims 6 to 9, wherein the tapered spline (6) is a female spline (6) formed in the first member (7).

11. A connection according to any one of claims 6 to 10, wherein the tapered spline has been formed by a method according to any one of claims 1 to 5, and the tapered spline which has been formed on a deflected portion of the first member (7) has a diameter $(D_1)$ in its deflected condition equal to or slightly greater than the diameter (D) of the untapered spline (9) of the second number.

## Patentansprüche

1. Verfahren zur Ausbildung einer verjüngten Nut (6) auf einem ersten Teil eines Glieds (7) um eine Achse (14) herum, wobei das Verfahren folgendes aufweist: Abbiegen des ersten Teils des Glieds (7) in die Axialrichtung, Räumen des abgebogenen ersten Teils des Glieds (7) zur Bildung einer nicht verjüngten Nut (6) am ersten Teil des Glieds (7) und Bewirken, daß das Glied (7) einen nicht abgebogenen Zustand wieder einnimmt.

2. Verfahren nach Anspruch 1, wobei der Abbiegeschritt folgendes aufweist: Halterung eines zweiten Teils (13) des Glieds, radial versetzt gegenüber dem ersten Teil und konzentrisch zur Achse gegenüber Axialbewegung, und Anlegen einer gleichförmigen Axialbelastung (P) konzentrisch zur Achse en den ersten Teil.

3. Verfahren nach Anspruch 2, wobei der Räumschritt eine Aufnahmenut (6) im Glied (7) bildet, wobei das Glied (7) benachbart zu seinem Umfang (13) während des Abbiegens gehaltert ist.

4. Verfahren nach Anspruch 2, wobei der Räumschritt eine Eingriffsnut (9) bildet und das Glied (7) auf seiner Mitte während der Abbiegung gehaltert ist.

5. Verfahren nach einem der vorhergehenden Ansprüche, wobei der Räumschritt in einem einzigen Durchgang ausgeführt wird.

6. Keilnutverbindung zwischen einem ersten Glied (7) und einem zweiten Glied (10), wobei die Verbindung eine verjüngte Nut (6) des ersten Glieds (7) aufweist, die zusammenpaßt mit einer Nut (9) des zweiten Glieds (10), dadurch gekennzeichnet, daß die Nut (9) des zweiten Glieds (10) nicht verjüngt ist.

7. Verbindung nach Anspruch 6, wobei der Durchmesser der nicht verjüngten Nut (9) D ist, und wobei die Durchmesser an entgegengesetzten Enden der verjüngten Nut (6) $D_2$ und $D_3$ sind, wobei $D_2 > D > D_3$.

8. Verbindung nach Anspruch 6 oder 7, wobei die Verjüngung im wesentlichen 0,1016 mm pro 25,4 mm Nutlänge ist.

9. Verbindung nach irgendeinem der Ansprüche 6 bis 8, wobei zwischen 1/2 und 3/4 der Länge der verjüngten Nut (6) größer im Durchmesser sind als die nicht verjüngte Nut (9), so daß folgendes gilt:

$$[D_2 + D_3]/2 \geq D \geq [D_2 + 3D_3]/4$$

10. Verbindung nach einem der Ansprüche 6 bis 9, wobei die verjüngte Nut (6) eine Aufnahmenut (6), ausgebildet im ersten Glied (7), ist.

11. Verbindung nach einem der Ansprüche 6 bis 10, wobei die verjüngte Nut durch eine Verfahren gemäß einem der Ansprüche 1 bis 5 gebildet ist, und wobei die verjüngte Nut, ausgebildet aus einem abgebogenen Teil des ersten Glieds (7) einen Durchmesser $(D_1)$ in ihrem abgebogenen gleich oder etwas größer als den Durchmesser (D) der nicht verjüngten Nut (9) des zweiten Gliedes aufweist.

## Revendications

1. Procédé pour former des cannelures effilées (6) sur une première partie d'un organe (7) autour d'un axe (14), le procédé consistant à fléchir la première partie de l'organe (7) dans la direction axiale; à mandriner la première partie fléchie de l'organe (7) afin de former des channelures non effilées (6) sur la première partie de l'organe (7); et à permettre à l'organe (7) de reprendre son état non fléchi.

2. Procédé selon la revendication 1, dans lequel l'étape de flexion consiste à retenir une seconde partie (13) de l'organe, décalée radialement à partir de la première partie et concentrique à l'axe, à l'encontre d'un déplacement axial; et à appliquer à la première partie une charge axiale uniforme (P) concentriquement à l'axe.

3. Procédé selon la revendication 2, dans lequel l'étape de mandrinage forme des cannelures femelles (6) dans l'organe (7) et l'organe (7) est retenu près de son pourtour (13) pendant la flexion.

4. Procédé selon la revendication 2, dans lequel l'étape de mandrinage forme des cannelures mâles (9) et l'organe (7) est retenu à son centre pendant la flexion.

5. Procédé selon l'une quelconque des revendications précédentes, dans lequel l'étape de mandrinage est réalisée an une seule passe.

6. Assemblage par cannelures entre un premier organe (7) et un second organe (10), l'assemblage comprenant des cannelures effilées (6) du premier organe (7) s'ajustant avec des cannelures (9) du second organe (10), caractérisé en ce que les cannelures (9) du second organe (10) ne sont pas effilées.

7. Assemblage selon la revendication 6, dans lequel le diamètre des cannelures non effilées (9) est D, et les diamètres aux extrémités opposées des cannelures effilées (6) sont $D_2$ et $D_3$ avec $D_2 > D > D_3$.

8. Assemblage selon la revendication 6 ou 7, dans lequel la conicité est sensiblement de 0,1016 mm par 25,4 mm de longueur de cannelure.

9. Assemblage selon l'une quelconque des revendications 6 à 8, dans lequel, entre la moitié et les 3/4 de la longueur des cannelures effilées (6), le diamètre est plus grand que celui des cannelures non effilées (9) de sorte que:

$$[D_2 + D_3]/2 \geq D \geq [D_2 + 3D_3]/4.$$

10. Assemblage selon l'une quelconque des revendications 6 à 9, dans lequel les cannelures effilées (6) sont des cannelures femelles (6) formées dans le premier organe (7).

11. Assemblage selon l'une quelconque des revendications 6 à 10, dans lequel les cannelures effilées ont été formées par un procédé selon l'une quelconque des revendications 1 à 5, et les cannelures effilées qui ont été formées sur une partie fléchie du premier organe (7) ont un diamètre $(D_1)$ dans l'état fléchi égal ou légèrement supérieur au diamètre (D) des cannelures non effilées (9) du second organe.

0 040 505

FIG. 4

FIG. 1

BROACH DIRECTION

FIG. 2
(AFTER BROACHING)

FIG. 3